# EUROPÄISCHE PATENTANMELDUNG

(11) **EP 3 114 922 A1**
(43) Veröffentlichungstag der Anmeldung: **11.01.2017**
(21) Anmeldenummer: 16177583.8
(22) Anmeldetag: 01.07.2016
(51) Int. Cl.: A01G 17/02

(54) **VORRICHTUNG ZUM AUSBRECHEN VON TRIEBEN**

(30) Priorität: 07.07.2015 DE 102015110982
(71) Anmelder: Wenzel-Schneider, Birgit, 55437 Nieder-Hilbersheim (DE); Schneider, Hans-Peter, 55437 Nieder-Hilbersheim (DE)
(72) Erfinder: Wenzel-Schneider, Birgit, 55437 Nieder-Hilbersheim (DE); Schneider, Hans-Peter, 55437 Nieder-Hilbersheim (DE)
(74) Vertreter: Limbeck, Achim

(57) **Zusammenfassung**

Die vorliegende Erfindung betrifft eine Vorrichtung zum Ausbrechen von Trieben an Weinstöcken, die ein an einem länglichen Haltestiel (1) angeordnetes Ausbrechwerkzeug (2) mit einer einen Weinstockstamm wenigstens teilweise umfassenden Öffnung (3) umfasst, durch welche das Ausbrechwerkzeug (2) beim Auf- und Abführen am Stamm durch diesen entlang des Stammes geführt ist, wobei die Öffnungsachse (4) des Ausbrechwerkzeuges (2) im Wesentlichen parallel oder in Längsrichtung zur Ausrichtung der Längsachse des Haltestiels (1) verläuft. Die erfindungsgemäße Vorrichtung ist dadurch gekennzeichnet, dass das Ausbrechwerkzeug (2) aus mindestens einer die Öffnung (3) zumindest nahezu umlaufend umfassenden Klinge oder Schneidekanten (80a, 80b) und/oder die Öffnung (3) zumindest nahezu umlaufend umfassenden, bürstenartig dicht angebrachten Borsten (6) gebildet ist, wobei das Ausbrechwerkzeug (2) spiralartig ausgebildet ist und als Einführungsöffnung die Spiralsteigung dient.

## Beschreibung

### Technisches Gebiet

Die vorliegende Erfindung betrifft eine Vorrichtung zum Ausbrechen von Trieben an Weinstöcken.

### Stand der Technik

Zur Gewährleistung hochwertiger Trauben benötigen die Reben vieler Sorten jährlich ein mehrmaliges Entfernen der jungen Triebe, was auch als Ausbrechen bekannt ist. Bei diesem Vorgang werden von Hand oder mittels eines Ausbrechmessers, einem Schneidwerkzeug oder einem Ausbrechhandschuh auf herkömmliche Weise insbesondere Wasserschosse, also Triebe, die quasi ungewollt aus dem faserigen Stammholz entspringen sowie insbesondere auch alle weiteren unfruchtbaren und mithin unerwünschten Triebe durch Ausüben eines seitlichen Drucks an der Kontaktstelle mit dem Stammholz und/oder durch Abstreifen bzw. Abreißen des Triebes entfernt. Härtere Triebe müssen abgeschnitten werden.

Nachteilig hierbei ist vor allem, dass ein sich ständig wiederholendes in die Hocke gehen gelenkbelastend für die Knie ist und nicht selten zu Knieschmerzen und Knieproblemen führt. Das bei dieser Ausbrechtechnik notwendige Herunterbücken ist zusätzlich sehr rückenunfreundlich und belastend für die Bandscheiben, wodurch Rückenschmerzen verursacht werden können. Der Vorgang ist darüber hinaus auch Kreislauf belastend, da der Oberkörper stets hinunter und wieder hinauf geführt werden muss. Ein weiterer Nachteil des herkömmlichen Ausbrechens besteht darin, dass diese Arbeit sehr zeitaufwendig und damit auch kostenintensiv ist.

Aus der DE 38 18 640 A1 ist eine Vorrichtung zum Ausbrechen von Knospen und jungen Trieben bekannt, die am Stamm von Weinreben oder Obstgehölzen wachsen. Sie besteht aus einem Stiel mit einem Handgriff am oberen und einer Bürste am unteren Ende. Die Bürste besitzt Borsten aus einem stabilen, elastisch nachgiebigen Material, insbesondere Kunststoff. Handgriff, Stiel und Bürste sind gegeneinander abgewinkelt, um das Arbeiten mit dem Gerät zu erleichtern. Mit der Bürste wird am Stamm der Pflanze auf- und abgefahren; dabei werden die Knospen und jungen Triebe abgekehrt, ohne daß die Gefahr besteht, die Rinde zu beschädigen.

Die DE 38 18 640 A1 beschreibt mithin eine Vorrichtung zum Ausbrechen von Trieben an Weinstöcken, die dadurch gekennzeichnet ist, dass sie ein an einem länglichen Haltestiel angeordnetes Ausbrechwerkzeug mit einer einen Weinstockstamm wenigstens teilweise umfassenden Öffnung umfasst, durch welche das Ausbrechwerkzeug beim Auf- und Abführen am Stamm durch diesen entlang des Stammes geführt ist, wobei die Öffnungsachse des Ausbrechwerkzeuges im Wesentlichen parallel oder in Längsrichtung zur Ausrichtung der Längsachse des Haltestiels verläuft.

Nachteilig hierbei ist, dass das Werkzeug den Stock nicht formschlüssig umschließt. Ein Gegenhalten, zumindest von einer Seite ist immer erforderlich. Weiterhin ist gemäß Fig.7 der DE 38 18 640 A1 eine vollständige Umschließung zwar möglich, jedoch nur unter der Bedingung, dass ein entsprechender Klappmechanismus oder eine Zangenbewegung oder andere händische Aufwendungen vorgesehen sind, die in der Regel aber Wartungsaufwand oder zusätzliche Arbeiten beinhalten.

Darüber hinaus zeigt die US 5 899 019 A ein Ausbrechwerkzeug mit einem Klappmechanismus, mittels dem nach dem Einführen keine direkte und komplette Umschließung des Stammes vorliegt, ohne dass ein Klappmechanismus Anwendung findet, was sich allerdings als sehr umständlich und zeitaufwendig erweist.

### Darstellung der Erfindung

Der vorliegenden Erfindung liegt die Aufgabe zu Grunde, eine Vorrichtung zu schaffen, welche die vorgenannten Nachteile ausräumt und welche geeignet ist, Triebe an Weinstöcken auf einfache und komfortable Weise auszubrechen.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Vorrichtung sind in den abhängigen Unteransprüchen angegeben.

Gemäß dem Stand der Technik umfasst die vorliegende Vorrichtung ein an einem länglichen Haltestiel angeordnetes Ausbrechwerkzeug mit einer einen Weinstockstamm wenigstens teilweise umfassenden Öffnung, durch welche das Ausbrechwerkzeug beim Auf- und Abführen am Stamm durch diesen entlang des Stammes geführt ist, wobei die Öffnungsachse des Ausbrechwerkzeuges im Wesentlichen parallel oder in Längsrichtung zur Ausrichtung der Längsachse des Haltestiels verläuft.

Erfindungsgemäß ist eine Vorrichtung der vorgenannten Art dadurch gekennzeichnet, dass das Ausbrechwerkzeug aus mindestens einer die Öffnung zumindest nahezu umlaufend umfassenden Klinge oder Schneidekanten und/oder die Öffnung zumindest nahezu umlaufend umfassenden, bürstenartig dicht angebrachten Borsten gebildet ist, wobei das Ausbrechwerkzeug spiralartig ausgebildet ist und als Einführungsöffnung die Spiralsteigung dient.

Der Ausbildung des Ausbrechwerkzeuges an sich sind im Grunde keine Grenzen gesetzt. In einer ganz besonders vorteilhaften Ausführungsform der Erfindung weist das Ausbrechwerkzeug die Öffnung zumindest nahezu umlaufend umfassende, bürstenartig dicht angebrachte Borsten auf. Hierbei kann es vorteilhaft sein, die Borsten an einer die Öffnung ringartig umfassenden Halterung anzuordnen, wobei die Borsten nach innen in Richtung der Öffnung ausgerichtet sind. Die Borsten können ebenfalls auch in verschiedenen Winkelgraden nach innen unten oder nach innen oben angebracht sein.

Als ringartig ausgebildete Halterung kommen kreis- und ovalförmige aber durchaus auch eckig ausgebildete Ringe in Betracht, welche die Öffnung zumindest teilweise umfassen. Die Durchmesser von Halterung und Öffnung sind variabel ausführbar. In der Halterung ist in dieser Ausführung eine Ausnehmung vorgesehen, welche als Durchführung des Weinstockstammes dient (Spiralsteigung ergibt die Öffnung).

In einer weiteren Ausführungsform der Erfindung kann das Ausbrechwerkzeug auch mindestens eine Schneide oder mindestens eine Klinge sein, wobei es sich als besonders vorteilhaft herausgestellt hat, die Schneidekanten des Ausbrechwerkzeugs spiralförmig auszugestalten, wobei sowohl nach oben als auch nach unten ausgerichtete Schneidekanten vorgesehen sind.

Erfindungsgemäß erfolgt das Ausbrechen in der Weise, dass zunächst mit einer leichten Drehbewegung in Schrägstellung des Stieles um den Weinstock die Vorrichtung bzw. das Ausbrechwerkzeug angelegt wird (das Einführen geschieht hierbei vorzugsweise gemäß der beschriebenen Ausführungform über die offene Steigung des spiralförmigen Werkzeuges). Jetzt kann das Ausbrechwerkzeug durch Auf- und Abbewegungen gegebenenfalls zusätzlich durch Drehbewegungen die herausgewachsenen Triebe leicht, schnell und schonend abbürsten. Die Besonderheit ist, dass die Führung der Auf- und Abbewegung durch die Form des Weinstockstammes vorgegeben ist, weil das Ausbrechwerkzeug den Weinstock umschließt und somit auch das Anvisieren der auszubrechenden Triebe, insbesondere bei der Klingen oder Schneidekantenversion, stark vereinfacht.

### Kurzbeschreibung der Zeichnungen

Weitere Ziele, Merkmale, Vorteile und Anwendungsmöglichkeiten der erfindungsgemäßen Vorrichtung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen
Fig.1 die Vorrichtung in einer vorteilhaften Ausführungsform;
Fig.2 die Vorrichtung in einer weiteren Ausführungsform.

### Ausführung der Erfindung

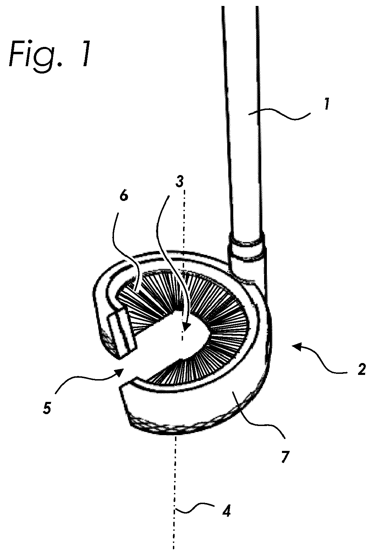

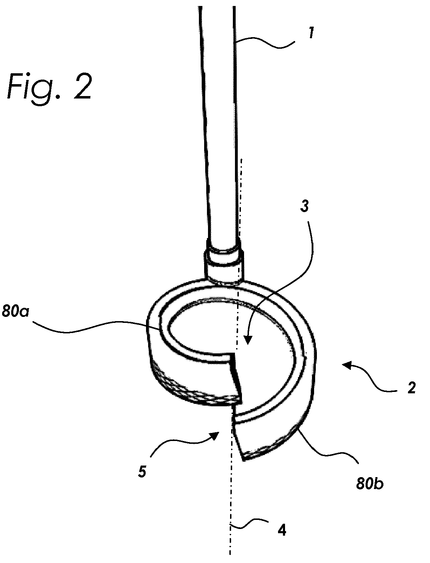

Wie aus Fig.1 ersichtlich, umfasst die Vorrichtung ein an einemlänglichen Haltestiel 1 angeordnetes Ausbrechwerkzeug 2 mit einer einen Weinstockstamm zumindest teilweise umfassenden Öffnung 3, wobei die Öffnung 3 in ihrem Durchmesser vorzugsweise derart ausgestaltet ist, dass die eingesetzten Borsten 6 (siehe Fig.1), Schneidekanten 80a und 80b (siehe Fig.2), Klingen oder andersartig ausgebildeten Ausbrechmittel an dem Ausbrechwerkzeug 2 nahezu komplett den Weinstockstamm umschließen und anliegen können.

Wie Fig.1 zeigt, ist das Ausbrechwerkzeug 2 im Wesentlichen senkrecht zur Längsachse des Haltestiels 1 ausgerichtet, so dass die Öffnungsachse 4 des Ausbrechwerkzeuges 2 in dieser Ausführung im Wesentlichen parallel zur Ausrichtung der Längsachse des Haltestiels 1 verläuft.

In dem in Fig.1 dargestellten Ausführungsbeispiel der Erfindung umfasst das Ausbrechwerkzeug 2 die Öffnung 3 zumindest nahezu umlaufend umfassende, bürstenartig dicht angebrachte Borsten 6. Diese Borsten 6 sind an einer die Öffnung 3 ringartig umfassenden Halterung 7 angeordnet und nach innen in Richtung der Öffnung 3 ausgerichtet. Durch die ringartige Anordnung der Borsten 6 nach innen verringert sich automatisch der Abstand der Borsten 6 zueinander. Die Borsten 6 bilden somit in Richtung der Öffnung 3 einen immer dichter - und mithin stabiler - werdenden Ring um die Öffnung 3. Bei den Borsten handelt es sich vorteilhaft um Kunststoffborsten, es kommen aber selbstverständlich auch Borsten aus Stahl oder anderen Materialien in Betracht. Es ist auch möglich, sofern die technische Fertigung es erlaubt, die Halterung 7 und die Borsten 6 in einem Teil (z.B. Spritzguss) zu fertigen.

In dem in Fig.2 dargestellten Ausführungsbeispiel der Erfindung ist das Ausbrechwerkzeug 2 aus mindestens einer die Öffnung 3 zumindest nahezu umlaufend umfassenden Klinge oder Schneide gebildet, wobei an dem Ausbrechwerkzeug 2 sowohl nach oben als auch nach unten ausgerichtete Schneidekanten 80a,80b vorgesehen sind. Das Ausbrechwerkzeug 2 ist dabei vorzugsweise spiralartig ausgebildet. In einer weiteren vorteilhaften Ausführungform der Erfindung ist in dieser Ausführung aus Fig.2 ein Osszillationsantrieb vorgesehen.

Besonders vorteilhaft ist es ferner, das Ausbrechwerkzeug 2 reversibel an dem Haltestiel 1 anzuordnen.

Darüber hinaus kann das Ausbrechwerkzeugs 2 mehrflüglig ausgebildet sein, wobei mindestens ein Flügel des Ausbrechwerkzeug 2 reversibel und/oder gelenkig an der Vorrichtung angeordnet ist, um ein Durchführen des Weinstockstammes zu ermöglichen.

Die erfindungsgemäße Vorrichtung beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Haltestiel
- 2: Ausbrechwerkzeug
- 3: Öffnung
- 4: Öffnungsachse
- 5: Durchführung
- 6: Borsten
- 7: Halterung
- 80a,80b: Schneidekanten

## Patentansprüche

1. Vorrichtung zum Ausbrechen von Trieben an Weinstöcken, die ein an einem länglichen Haltestiel (1) angeordnetes Ausbrechwerkzeug (2) mit einer einen Weinstockstamm wenigstens teilweise umfassenden Öffnung (3) umfasst, durch welche das Ausbrechwerkzeug (2) beim Auf- und Abführen am Stamm durch diesen entlang des Stammes geführt ist, wobei die Öffnungsachse (4) des Ausbrechwerkzeuges (2) im Wesentlichen parallel oder in Längsrichtung zur Ausrichtung der Längsachse des Haltestiels (1) verläuft,
**dadurch gekennzeichnet, dass**
das Ausbrechwerkzeug (2) aus mindestens einer die Öffnung (3) zumindest nahezu umlaufend umfassenden Klinge oder Schneidekanten (80a, 80b) und/oder die Öffnung (3) zumindest nahezu umlaufend umfassenden, bürstenartig dicht angebrachten Borsten (6) gebildet ist, wobei das Ausbrechwerkzeug (2) spiralartig ausgebildet ist und als Einführungsöffnung die Spiralsteigung dient.

2. Vorrichtung nach Anspruch 1,
**dadurch gekennzeichnet, dass**
an dem Ausbrechwerkzeug (2) mindestens eine Durchführung (5) für einen Weinstockstamm vorgesehen ist.

3. Vorrichtung nach einem der vorangegangenen Ansprüche,
**dadurch gekennzeichnet, dass**
die Borsten (6) an einer die Öffnung (3) ringartig umfassenden Halterung (7) angeordnet und nach innen in Richtung der Öffnung (3) ausgerichtet sind.

4. Vorrichtung nach einem der vorangegangenen Ansprüche,
**dadurch gekennzeichnet, dass**
das Ausbrechwerkzeug (2) mehrflüglig ausgebildet ist, wobei mindestens ein Flügel des Ausbrechwerkzeugs (2) reversibel und/oder gelenkig an der Vorrichtung angeordnet ist, um ein Durchführen des Weinstockstammes zu ermöglichen.

5. Vorrichtung nach einem der vorangegangenen Ansprüche,
**dadurch gekennzeichnet, dass**
an dem Ausbrechwerkzeug (2) sowohl nach oben als auch nach unten ausgerichteten Schneidekanten (80a,80b) vorgesehen sind.

6. Vorrichtung nach einem der vorangegangenen Ansprüche,
**dadurch gekennzeichnet, dass**
das Ausbrechwerkzeug (2) reversibel an dem Haltestiel (1) angeordnet ist.
